# EUROPEAN PATENT APPLICATION

(11) **EP 2 444 888 A1**
(43) Date of publication of application: **25.04.2012**
(21) Application number: 10306147.9
(22) Date of filing: 21.10.2010
(51) Int. Cl.: G06F 3/06

(54) **Method of managing data storage devices**

(71) Applicant: Alcatel Lucent, 75007 Paris (FR)
(72) Inventor: Parladori, Giorgio, 20129, Milan (IT); Donadio, Pasquale, 80129, Napoli (IT)
(74) Representative: Meyer zu Bexten, Elmar

(57) **Abstract**

Method of managing a plurality of data storage devices, which method comprises scheduling an application, allocating a system resource of the data storage devices to the application, monitoring a usage of the system resource by the application, rescheduling the application based on the usage, and finalizing the application.

## Description

### Field of the Invention

The invention relates to a method of managing data storage devices.

### Background

This section introduces aspects that may be helpful in facilitating a better understanding of the invention. Accordingly, the statements of this section are to be read in this light and are not to be understood as admissions about what is in the prior art or what is not in the prior art.

In library and information science, a data storage device is a device for recording or storing data. Recording can be done using virtually any form of energy, spanning from manual muscle power in handwriting, to acoustic vibrations in phonographic recording, to electromagnetic energy modulating magnetic tape and optical discs.

A storage device may hold information, process information, or both. A device that only holds information is a recording medium. Devices that process information, sometimes called data storage equipment, may either access a separate removable and portable recording medium or a permanent component to store or retrieve information.

Electronic data storage is storage which requires electrical power to store and retrieve its data. An example of an electronic data storage device is a hard disk drive (HDD), also known as a hard disk or hard drive. By HDD is meant is a nonvolatile storage device for digital data. It features one or more rotating rigid platters on a motor-driven spindle within a metal case. Data is encoded magnetically by read/write heads that float on a cushion of air above the platters.

As of 2010, a typical desktop HDD has a sustained "disk-to-buffer" data transfer rate of approximately 70 megabytes per second. In telecommunications and computing, data transfer rate, sometimes referred to as data rate, bitrate, or bit rate, is the number of bits or bytes that are conveyed or processed per unit of time. A major downside of state-of-the-art data storage devices lies in this limited data transfer rate.

### Summary

The present invention was made in view of the prior art described above, and the object of some embodiments is to provide a practical method capable of managing data storage devices in a fashion that allows to maximize their accumulated throughput, potentially aligning it with the data transfer rate of state-of-the-art transport networks.

According to an embodiment there is provided a method of managing a plurality of data storage devices, which method comprises scheduling an application, allocating a system resource of the data storage devices to the application, monitoring a usage of the system resource by the application, rescheduling the application based on the usage, and finalizing the application.

### Description of the Embodiments

Hereinafter, the best mode for carrying out a method according to an embodiment is described in detail.

In this embodiment, the steps of the method are performed by an operating system (OS), that is, a piece of software that manages the data storage devices and provides common services for efficient execution of the application. In this context, by application, sometimes called application software, is meant computer software designed to help a user perform singular or multiple related specific tasks. Examples include enterprise software, accounting software, office suites, graphics software, and media players.

To allow the application to efficiently and reliably store large volumes of data, the data storage devices take the form of HDDs. For the purpose of providing a telecommunications service, these HDDs are attached to a network element (NE), that is, a manageable logical entity uniting one or more further physical devices. Here, the NE takes the form of a node, that is, a connection point such as a communication endpoint or redistribution point - for instance, a router or optical switch. Together with further nodes, terminals, and links, the node forms a telecommunications network for provision of the telecommunications service to users of the terminals. To facilitate communications among computers, the telecommunications network takes the form of a computer network, often simply referred to as a network, that is, a collection of computers and devices connected by communications channels.

For accelerated access to the data stored thereon, the HDDs are equipped with a disk buffer, often ambiguously called a disk cache or cache buffer. In computer storage, by disk buffer is meant any memory acting as a buffer between the node and the physical hard disk platter of a HDD, that is, any region of memory used to temporarily hold the data while it is read from or written to any of the HDDs.

To allow the node to access the computer network, the former is equipped with a network interface card (NIC), also known as a network card, network adapter, network interface controller, or LAN adapter. Where the node comprises more than one NIC, the potential associations between these NICs and the HDDs attached to the node may conceptually be represented as a two-dimensional matrix.

In preparation for execution of the application, the OS schedules the application, that is, assigns it to a suitable subset of the available HDDs. In the course of this operation, the OS allocates a system resource of the HDDs to the application. In computer science, by system resource, sometimes called resource, is meant any physical or virtual component of limited availability within a HDD. In the embodiment at hand, to cater for the storage requirements of the application, the allocated system resource takes the form of disk space.

To allow for transparent integration of conventional applications and HDDs, the OS discovers both the application and available disk space automatically, alleviating the need for dedicated programming interfaces to report on their configuration and requirements. As a further benefit of this embodiment, such discovery may allow state-of-the-art software and hardware to be employed in a method according to the embodiment with no or minimum adjustment. The properties, configuration, and status observed during discovery are collected along with performance and error statistics and may subsequently be correlated and supplied for the representation of the connection between different storage units.

At runtime, using at least one of the NICs, the application transfers data stored on the HDDs to which it is assigned over the computer network. While it executes the application, the OS continuously or periodically monitors usage of the disk space by the application. In the course of this procedure, it compares the currently observed state of both the application and the disk space to a respective target which may be predetermined or set by means of a programming interface.

In case the OS detects a failure of either the HDD or the application, it may alert an administrator to the issue, optionally taking into account the severity of the failure encountered. One such application failure may take the form of a crash. In computing, a crash, sometimes called system crash, is a condition where the application exits abnormally after encountering an error. In the event of a HDD failure, the monitoring service performs error isolation by trying to find the actual cause of the fault.

To put the results of monitoring to an effective use, the OS, upon completing each monitoring cycle, collects statistics on disk space usage by means of an associated data warehouse. In IT management, by data warehouse is meant a repository of the OS's electronically stored usage statistics that is designed to facilitate reporting and analysis. In particular, to facilitate decision support, the data warehouse serves as a basis for trend reports on disk space usage. Among the data thus collected are performance statistics and error statistics as well as configuration parameters, supporting both operational and economic conclusions.

Based on its observations, the OS reschedules the application, potentially reassigning it to a different subset of HDDs. Accordingly, the OS migrates any data already stored on the HDDs, that is, it transfers such data from the previously assigned HDDs to those allotted according to the new schedule. In rescheduling the application and migrating the associated data, the OS further takes into account any target data transfer rate of the node that may be imposed by the application.

Upon completion of the tasks at hand, the OS finalizes the application and frees the disk space allocated to it during runtime.

To simplify configuration of the HDDs and associated disk buffer, the OS comprises a central management interface to aid the administrator in the coordination and validation of the process steps described above. Further allowing for an impact assessment of envisaged configuration changes, this interface may allow the administrator to simulate such changes in a controlled environment.

As an optional feature, the interface comprises a data management service to support tasks related to the performance, backup, archival, and migration of stored data, as well as to control their efficient utilization and availability. Preferably, the data management service allows the administrator to define policies for the placement and flow of data stored on the HDDs.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description merely illustrates the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of managing a plurality of data storage devices, which method comprises scheduling an application, allocating a system resource of the data storage devices to the application, monitoring a usage of the system resource by the application, rescheduling the application based on the usage, and finalizing the application.

2. Method as in claim 1 wherein the data storage devices are attached to a network element.

3. Method as in claim 2 wherein the network element comprises a plurality of network interface controllers.

4. Method as in claim 3 which comprises transferring data stored on at least one of the data storage devices over a telecommunications network by means of at least one of the network interface controllers.

5. Method as in any of the preceding claims which comprises aggregating the data storage devices.

6. Method as in claim 5 which comprises migrating data between the data storage devices based on the usage.

7. Method as in claim 6 wherein the data migration is further based on a predetermined target data transfer rate of the network element.

8. Method as in any of the preceding claims which comprises buffering the data storage devices by means of a data buffer.

9. Method as in claim 8, when dependent on claim 2, wherein the network element comprises a matrix connected to the data buffer.

10. Method as in any of the preceding claims which comprises discovering the application and the system resource.

11. Method as in any of the preceding claims wherein the monitoring comprises comparing a current state of the application and a current state of the system resource with respective predetermined target states.

12. Method as in any of the preceding claims which comprises raising an alert in response to detecting a failure of the application or of the resource.

13. Method as in any of the preceding claims which comprises collecting usage statistics upon monitoring the usage of the system resource.

14. Method as in claim 13 which comprises storing the usage statistics by means of a data warehouse.

15. Method as in claim 14 which comprises analyzing a trend in usage of the system resource by the application based on the usage statistics.
